# FASCICULE DE BREVET EUROPEEN

(11) **EP 3 763 186 B1**
(45) Date de publication et mention de la délivrance du brevet: **01.05.2024**
(21) Numéro de dépôt: 20169513.7
(22) Date de dépôt: 15.04.2020
(51) Int. Cl.: A01C 7/20, A01C 15/00

(54) **ELEMENT SEMEUR ET SEMOIR**
SÄELEMENT UND SÄMASCHINE
SEEDER ELEMENT AND SOWING MACHINE

(30) Priorité: 10.07.2019 EP 19290053
(43) Date de publication de la demande: 13.01.2021
(73) Titulaire: Ribouleau Monosem, 79240 Largeasse (FR)
(72) Inventeur: PUICHAULT, Alexis, 79140 Cerizay (FR); DOLE, Damien, 79300 Bressuire (FR)
(74) Mandataire: Kessler, Marc

(56) Documents cités:
- EP-A1- 0 729 698
- WO-A2-2014/066643
- DE-A1- 4 417 964
- FR-A1- 2 691 039

## Description

### Objet de l'invention

La présente invention concerne un élément semeur pour la distribution d'au moins un produit granulaire, de préférence la distribution concomitante de plusieurs produits granulaires, qui comprend au moins une première trémie d'alimentation mobile. L'invention porte également sur un semoir comprenant un tel élément semeur.

### Etat de la technique

Dans le domaine agricole, les semoirs de distribution de produits granulaires, du type semence, engrais, ou produit phytosanitaire, comprennent classiquement une pluralité d'éléments semeurs portés par un châssis principale, ce dernier étant généralement muni de plusieurs roues, permettant son déplacement par rapport au sol, des roues pouvant être mobiles, relevables ou rétractables, afin qu'elles ne soient pas en contact avec le sol, par exemple lors de manoeuvres ou du transport du semoir.

Les éléments semeurs peuvent être autotractés, mais habituellement ils sont soit tractés ou trainés par un engin agricole, par exemple un tracteur ; Ils comprennent alors des moyens d'attelage à un engin agricole ou à un châssis principal. Ils comprennent en outre classiquement des moyens pour ouvrir un sillon dans le sol, des moyens pour le refermer, une ou plusieurs trémies aptes à stocker, et comprenant en fonctionnement, un produit granulaire, ou des produits granulaires différents, à semer ou à épandre, éventuellement de façon concomitante.

Les éléments semeurs comprennent généralement un ou plusieurs ensembles de distribution des produit granulaires pour leur distribution au sol, habituellement un ensemble de distribution par type de produit granulaire, chacun pouvant éventuellement comprendre ou coopérer avec des moyens de convoyage des produits granulaires au sol, l'ensemble de distribution, ou chaque ensemble de distribution, coopérant ou étant connecté chacun avec une trémie de stockage des produits granulaires.

Pour des semoirs permettant l'épandage concomitant de différents produits granulaires, il est connu d'employer des trémies pivotantes et amovibles. Par exemple, le document EP0140262 décrit un semoir comprenant une trémie pivotante sur elle même, par rapport au châssis qui la porte, selon un axe unique, transversale par rapport au châssis, pour un pivotement vers l'arrière de la trémie afin de faciliter sa manipulation par un opérateur qui peut alors la soulever et la séparer du châssis pour son remplacement. De même, le document EP0729698 décrit une trémie à deux réservoirs, montée pivotante à l'extrémité d'un bras, selon un axe unique, et mise en mouvement à l'aide de vérins hydrauliques.

Par ailleurs, le document FR2691039 décrit un semoir comprenant une trémie, qui n'est pas montée sur un bâti. La trémie est montée mobile entre une position élevée, une position de travail, au-dessus des outils du travail du sol, à proximité immédiate de l'arrière du tracteur auquel le semoir est couplé, et une position basse, de remplissage et de vidange de la trémie ou d'entretien des moyens de dosage, une position dans laquelle la trémie se trouve en arrière du semoir. Le passage d'une position à une autre se fait par basculement ou selon un plan incliné, à l'aide de deux bras sensiblement parallèles, articulés à des points du châssis du semoir et de la trémie, et à l'aide d'un vérin hydraulique reliant un des bras à l'extrémité de l'autre bras.

De même, le document DE4417964 décrit un semoir comprenant une trémie, qui n'est pas montée sur un bâti. La trémie est montée mobile entre une première position élevée, qui est la position de travail, une position basse, de remplissage de la trémie et une seconde position élevée, de maintenance, dans laquelle la trémie et les outils du semoir sont relevés, le passage d'une position à une autre se faisant à l'aide d'une série de deux parallélogrammes, chacun ayant deux bras montés mobiles sur une portion articulée du châssis du semoir, un des deux parallélogrammes ayant un troisième bras relié à une portion articulée du châssis à l'aide d'un vérin hydraulique, et relié à la trémie par un bras ressort, permettant d'abaisser la trémie à mesure qu'elle se vide lors du fonctionnement du semoir.

Toutefois, les éléments semeurs présentent l'inconvénient majeur de ne pas permettre un accès facilité pour la maintenance ou le remplacement des différents éléments qui les composent, comme par exemple l'ensemble ou les ensembles de distribution de produits granulaires. En effet, tous les éléments qui composent un élément semeur sont disposés très proches les uns des autres, généralement rassemblés sous la trémie principale, afin que l'élément semeur soit aussi compact que possible et pour qu'il puisse être disposé en plus grand nombre sur un seul semoir.

### Buts de l'invention

La présente invention vise à fournir un élément semeur et un semoir, comprenant un tel élément semeur, qui ne présentent pas les inconvénients de l'état de la technique.

La présente invention vise à fournir une alternative aux solutions de l'état de la technique existantes.

L'invention propose une solution permettant de rendre facilement accessible les composants de l'élément semeur, aux fins de leur contrôle, leur maintenance, ou leur remplacement, en particulier sans l'emploi de moyens hydrauliques ou pneumatiques.

### Résumé de l'invention

La présente invention porte sur un élément semeur de produits granulaires à distribuer au sol comprenant un châssis, un premier ensemble de distribution d'un premier produit granulaire comprenant une trémie principale, fixée à un bâti, qui est mobile par rapport au châssis et apte à adopter une position dite « abaissée », qui est la position de travail de l'élément semeur et une position dite « relevée », qui est la position de maintenance de l'élément semeur, et à passer de la position « abaissée » à la position « relevée » et inversement, l'élément semeur comprenant en outre des moyens de basculement du bâti comprenant un quadrilatère déformable ou un double quadrilatère déformable, liant le bâti au châssis, les moyens de basculement étant disposés sensiblement perpendiculairement au plan d'extension sensiblement horizontal formé par le châssis s'étendant le long de l'axe X-X', et maintenus sensiblement perpendiculaires au plan d'extension dans les positions « abaissée » et « relevée » et lors du passage de l'une à l'autre et inversement.

Selon des modes particuliers de l'invention, l'élément semeur selon l'invention comprend au moins une, ou une combinaison quelconque appropriée, des caractéristiques suivantes :
- les moyens de basculement du bâti comprennent un bras inférieur, fixe et solidaire du châssis, portant deux points de pivots inférieurs fixes, autour desquels s'articulent respectivement une biellette principale et une biellette secondaire, le bâti s'articulant par rapport à la biellette principale à un premier point de pivot supérieur et la biellette secondaire s'articulant par rapport à un bras de liaison supérieur à un second point de pivot supérieur, le bras de liaison supérieur étant relié au bâti ou à la biellette principale, les premier et second points de pivot supérieurs étant mobiles par rapport audit châssis,
- la distance entre le point de pivot inférieur bas et le point de pivot inférieur haut du bras inférieur est supérieure à la distance entre le point de pivot supérieur bas du bras de liaison supérieur et le point de pivot supérieur haut du bâti,
- la distance entre le point de pivot inférieur haut du bras inférieur et le point de pivot supérieur bas de la biellette secondaire est inférieure à la distance entre le point de pivot inférieur bas du bras inférieur et le point de pivot supérieur haut du bâti,
- le bras inférieur comprend des moyens pour recevoir un arbre de pivotement dont l'axe forme un des deux points de pivots inférieurs et dans lequel le bras de liaison supérieur comprend des moyens pour recevoir un arbre de pivotement dont l'axe forme le second point de pivot supérieur, la biellette secondaire comprenant des moyens d'engagement des arbres de pivotement,
- la biellette principale comprend des moyens pour recevoir un arbre de pivotement inférieur, dont l'axe forme l'un des points de pivot inférieur, et des moyens pour recevoir un arbre de pivotement supérieur, dont l'axe forme le point de pivot supérieur haut,
- la biellette principale est solidaire du bâti, par l'intermédiaire d'une patte de fixation,
- l'élément semeur comprend en outre des moyens d'attelage comprennent une barre d'outils, à laquelle le châssis est lié, et comprenant en outre des moyens de réglage de la position vertical dudit élément semeur comprenant un parallélogramme déformable ou un parallélépipède déformable, disposé sensiblement horizontalement, et étant articulé par rapport au châssis par au moins un point de pivotement, qui est également un point de pivot des moyens de basculement du bâti,

- le premier ensemble de distribution du premier produit granulaire comprend en outre des premiers moyens de distribution unitaire du premier produit granulaire, qui sont solidaires du bâti et donc mobiles avec le bâti, l'élément semeur comprenant en outre des premiers moyens de convoyage du premier produit granulaire jusqu'au sol, qui sont solidaires du châssis et donc fixes par rapport au châssis,
- les premiers moyens de distribution unitaire du premier produit granulaire sont fixés à un bras fixé au bâti, et s'étendant depuis le bâti vers le châssis, le bras étant mobile par rapport au châssis, et apte à engager et se désengager de moyens de fixation, prévus sur le châssis et aptes à recevoir le bras,
- l'élément semeur comprend en outre un deuxième ensemble de distribution d'un second produit granulaire, comprenant une première trémie annexe, solidaire du bâti, et donc mobile avec le bâti,
- le deuxième ensemble de distribution d'un second produit granulaire comprend des seconds moyens de distribution unitaire, solidaires du bâti, et donc mobiles par rapport au châssis,
- l'élément semeur comprend en outre un troisième ensemble de distribution d'un troisième produit granulaire au sol, comprenant une seconde trémie annexe, solidaire du bâti et donc mobile par rapport au châssis, et comprenant éventuellement des seconds moyens de convoyage dudit second produit granulaire jusqu'au sol,
- le troisième ensemble de distribution d'un troisième produit granulaire au sol comprenant en outre des troisièmes moyens de distribution unitaire, qui sont solidaires du bâti ou de la seconde trémie annexe, et donc mobiles par rapport au châssis, l'élément semeur comprenant en outre des troisièmes moyens de convoyage du troisième produit granulaire jusqu'au sol, qui sont solidaires du châssis et donc fixes par rapport au châssis.

La présente invention porte aussi sur un semoir comprenant un ou plusieurs éléments semeurs selon l'invention.

### Brève description des figures

La figure 1 est une représentation schématique d'une vue de coté d'un élément semeur selon l'invention, dont la trémie principale est en position abaissée.
La figure 2 est la même représentation que celle de la figure 1.
La figure 3 est une représentation schématique de la trémie principale de l'élément semeur selon l'invention.
La figure 4 est une représentation schématique d'une vue de coté de l'élément semeur des figures 1 et 2, dont la trémie principale est en position levée.
La figure 5 est la même représentation que celle de la figure 4.
La figure 6 est une représentation schématique de l'élément semeur selon l'invention, dont la trémie principale est en position levée, vu par l'arrière.
La figure 7 est une représentation schématique d'une vue de coté d'une coupe transversale des moyens de basculement selon l'invention qui sont repliés.
La figure 8 est une représentation schématique d'une vue de coté des moyens de basculement selon l'invention lors de son déploiement.
La figure 9 est une représentation schématique d'une vue de coté des moyens de basculement selon l'invention qui sont déployés.
La figure 10 est une représentation schématique d'une première vue en perspective des moyens de basculement selon l'invention qui sont déployés.
La figure 11 est une représentation schématique d'une seconde vue en perspective des moyens de basculement selon l'invention qui sont déployés.

### Description détaillée de l'invention

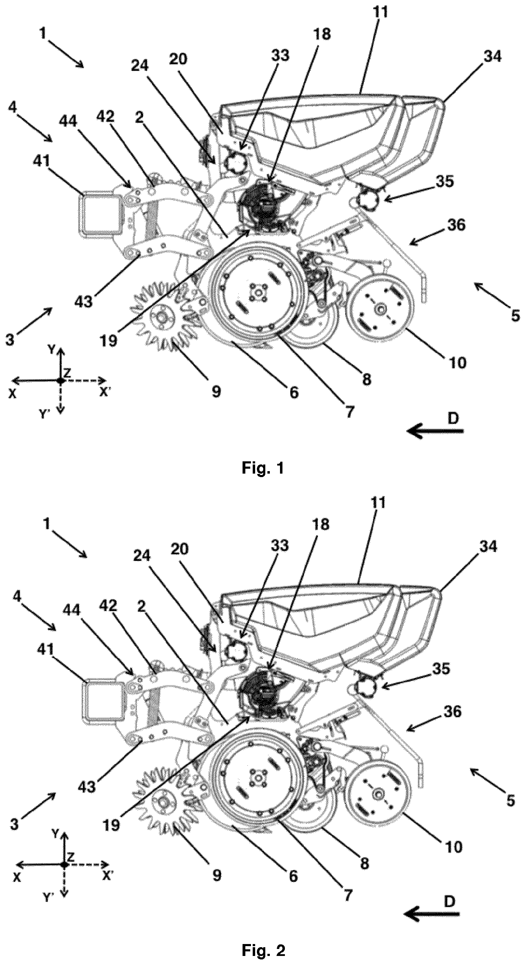

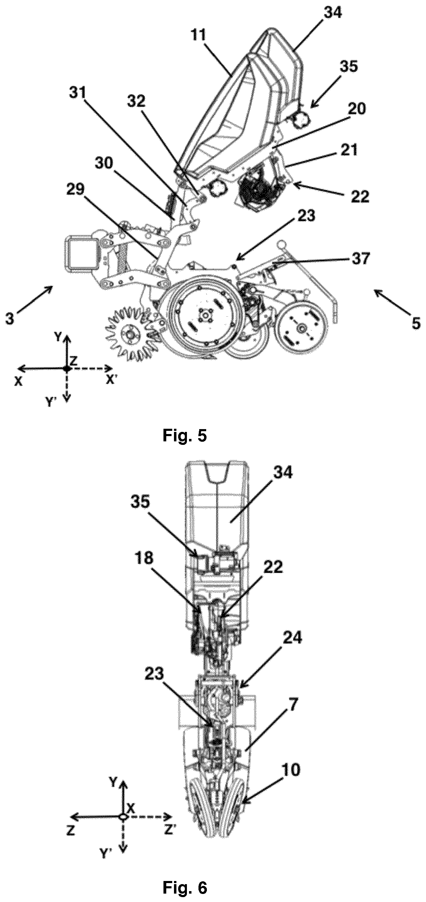

Dans la suite de la description et des revendications, les termes « haut », « bas », « au-dessus », « en dessous », « supérieur », « inférieur », « vertical » et « horizontal », « avant » et « arrière » font référence à la position normale de l'élément semeur 1 selon l'invention, et des éléments qui le compose, lors de son utilisation normale, et, en particulier, ils font référence à sa ou leur positions telle que représentées aux figures 1 à 11.

L'élément semeur 1 selon l'invention est monté sur un châssis 2, autotracté, ou bien porté ou tracté par un engin agricole, par exemple un tracteur. Le châssis 2 s'étend sensiblement horizontalement, dans le plan X-X', et comprend une partie avant 3, qui est définie selon le sens de déplacement D de l'élément semeur 1 lors de son utilisation normale, comme représenté sur la figure 1. Pour un élément semeur 1 tracté, il s'agit de la partie se situant à proximité de l'arrière de l'engin agricole, et portant des moyens d'attelage 4 permettant de le lier de façon réversible à l'engin agricole, et une partie arrière 5, qui est opposée à ladite partie avant 3.

De préférence, les moyens d'attelage 4 comprennent une barre d'outils 41, à laquelle le châssis 2 est lié par l'intermédiaire de moyens de réglage de la position vertical, selon l'axe Y'-Y, de l'élément semeur 1 par rapport à la barre d'outils 41. Ces moyens de réglage comprennent un parallélogramme déformable 44 comprenant au moins deux séries de bras supérieurs 42, de préférence également deux séries de bras inférieurs 43 sensiblement parallèles aux bras supérieurs 42, le parallélogramme déformable 44 étant articulé par rapport au châssis 2 à au moins un point de pivot sur le châssis 2, de préférence deux points de pivot, avantageusement deux séries de deux points de pivot, permettant ainsi l'articulation par rapport au châssis 2 des bras supérieurs 42 et des bras inférieurs 43.

L'élément semeur 1 comprend en outre des moyens 6 pour ouvrir un sillon dans le sol, de préférence d'une profondeur contrôlée, qui sont, ou comprennent, des disques ouvreurs, et comprenant de préférence également une ou plusieurs roues de jauges 7 permettant de régler, en fonction de leur position, la profondeur du sillon, et éventuellement également des moyens pour façonner la forme du fond du sillon.

L'élément semeur 1 peut comprendre des moyens 8 de tassement d'un ou des produits granulaires déposés au fond du sillon ouvert. De préférence, ces moyens 8 sont, ou comprennent, au moins une roue plombeuse.

L'élément semeur 1 comprend en outre des moyens 10 pour refermer le sillon, qui sont, ou comprennent, un ou plusieurs disques ou roues de fermeture, s'étendant derrière des moyens 6 pour ouvrir le sillon et en arrière des moyens 8 de tassement s'ils sont présents. De préférence, ces moyens 10 sont disposés en arrière de l'élément semeur 1.

L'élément semeur 1 peut comprendre en outre des moyens 9 chasses débris pour chasser des résidus de culture, des mottes de terre ou des pierres qui sont, ou comprennent, au moins une roue rotative, disposée en avant de l'élément semeur 1.

L'élément semeur 1 comprend au moins un premier ensemble de distribution d'un premier produit granulaire, qui est de préférence une graine ou une semence, qui est apte à déposer le premier produit granulaire entre les moyens 6 pour ouvrir le sillon.

Ce premier ensemble comprend une trémie 11, dite « principale », apte à comprendre, et en fonctionnement comprenant, les graines à semer, qui est de préférence disposée en partie haute du châssis 2, au dessus, à l'aplomb ou en arrière des moyens 6 pour ouvrir un sillon, en avant des moyens 10 pour refermer le sillon.

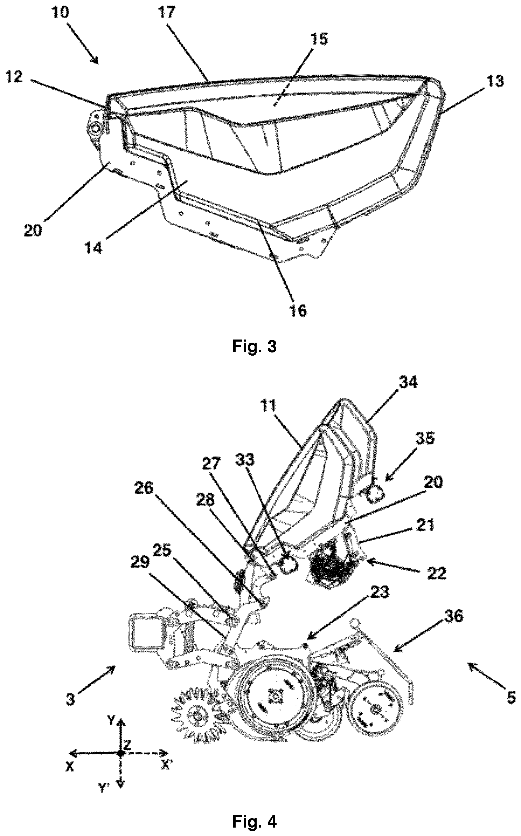

La trémie principale 11 peut adopter toutes les dimensions et formes possibles ou adéquats, définissant un volume intérieur. De préférence, elle possède une forme sensiblement parallélépipédique et comprend une paroi avant 12, une paroi arrière 13, opposée à la paroi avant 12, une première paroi latérale 14, une seconde paroi latérale 15, opposée à la première paroi latérale 14, une paroi inférieure 16 et une paroi supérieure 17, opposée à la paroi inférieure 16 (figure 3), la paroi supérieure 17 étant, de préférence, ouverte ou partiellement ouverte afin de permettre le chargement d'au moins le premier produit granulaire, et obturable, et en fonctionnement obturée, par un couvercle mobile.

Le premier ensemble de distribution comprend en outre des premiers moyens 18 de distribution, pour distribuer de façon unitaire et dissociée, le premier produit granulaire, des graines à semer, qui sont, en fonctionnement, en communication avec la trémie principale 11, par exemple par une ouverture, de préférence obturable, pratiquée dans la paroi inférieure 16 de la trémie principale 11. Ces premiers moyens 18 de distribution unitaire, utilisent de préférence un principe pneumatique, les graines étant chargées, à l'unité, par aspiration ou dépression, sur un disque de distribution alvéolaire, disposé sensiblement verticalement, et qui est en rotation, les graines étant ensuite relâchées, ou extraites, une à une, par soufflage ou arrêt de la dépression ou à l'aide d'une extraction mécanique. A ces fins, le premier ensemble de distribution peut comprendre ou coopérer avec des moyens d'aspiration et/ou de soufflage.

Les premiers moyens 18 de distribution sont disposés, de préférence, sous la trémie principale 11, au dessus, et en arrière, des moyens 6 pour ouvrir un sillon, par exemple pour un dépôt gravitaire des graines. Ces premiers moyens 18 de distribution sont aptes à déposer les premiers produits granulaires entre les moyens 6 pour ouvrir le sillon, pour un dépôt des premiers produits granulaires dans le sillon formé. De préférence, les premiers moyens 18 de distribution coopèrent et communiquent, en fonctionnement, avec des premiers moyens de convoyage 19 permettant de diriger les graines pendant leur chute et d'éviter qu'elles ne tombent en dehors du sillon, des premiers moyens de convoyage 19 coopérant avantageusement également avec des moyens de transfert des graines depuis le disque de distribution des premiers moyens de distribution vers les premiers moyens de convoyage 19 des graines au sol.

De préférence, la trémie principale 11 est fixée à un bâti 20 rigide, par tous moyens adéquats. De préférence, le bâti 20 est fixée sur la surface externe de la paroi avant 12 de la trémie principale 11, et éventuellement également sur la surface externe de la paroi inférieur 16, et suit le contour de cette ou ces parois 12, 16, si cette ou ces dernières ne sont pas droites (figure 3).

Les premiers moyens 18 de distribution du premier ensemble de distribution peuvent être solidaires du châssis 2 ; toutefois, de préférence, ils sont également fixés au bâti 20, et sont ainsi solidaires de la trémie principale 11. Dans les modes de réalisation dans lesquels les premiers moyens 18 de distribution comprennent des moyens de transfert des produits granulaires vers les premiers moyens de convoyage 19, ces moyens de transfert sont également solidaires de la trémie principale 11. Ils sont fixés au bâti 20, soit directement, soit par l'intermédiaire des moyens 18 de distribution.

De préférence, les premiers moyens 18 de distribution sont fixés sur un bras 21, qui est fixe par rapport au bâti 20, faisant saillie et s'étendant depuis ce dernier vers le châssis 2, de façon sensiblement verticale, de haut en bas, éventuellement de façon oblique (figure 4). Son extrémité libre 22, à savoir celle opposée à celle fixée au bâti 20, engage de façon réversible le châssis 2, éventuellement par un engagement par force, par l'intermédiaire de moyens de fixation 23 prévus sur le châssis, ce qui présente l'avantage de constituer un point de verrouillage du bâti 20 sur le châssis 2.

Par exemple, l'extrémité libre 22 du bras 21 peut être munie d'un ou plusieurs crochets, de préférence pivotants, venant engager un axe transversal, selon l'axe Z-Z', prévu sur le châssis 2 et fixe par rapport à ce dernier, ou bien une grenouillère sur le bras 21 engageant des pions de centrage sur le châssis 2. Il est également possible de prévoir que l'extrémité libre 22 du bras 21 peut être munie d'un orifice débouchant, que les moyens de fixation 23 du châssis 2 comprennent une patte de fixation elle-même munie d'un orifice débouchant, les orifices étant destinés à recevoir un axe transversal amovible, ou une broche.

Le bâti 20 est lié de façon mobile au châssis 2 de l'élément semeur 1, pour un basculement du bâti 20, et donc de tous les éléments liés à ce dernier, comme la trémie principale 11, par rapport au châssis 2, non pas par un simple mouvement de pivotement par rapport à un point de pivot, ou un axe de pivotement, unique du châssis 2, mais par un mouvement de rotation vers l'avant de l'élément semeur 1, couplé à un mouvement de translation sensiblement horizontal.

Le bâti 20 peut adopter, par rapport au châssis 2, une position dite « abaissée » et une position dite « relevée », et peut passer d'une position à l'autre.

La position abaissée est celle, dans laquelle le bâti 20, et donc au moins la trémie principale 11, se trouve(nt) sensiblement disposé(es) à l'horizontal, sensiblement dans le plan X-X', et à proximité du châssis 2, comme représenté aux figures 1 et 2. Il s'agit de la position de travail de la trémie principale 11, lors de son utilisation normale sur le semoir 1, et la position normale de travail du semoir 1 lors de son fonctionnement normal.

La position relevée est celle dans laquelle le bâti 20, et donc au moins la trémie principale 11, se trouve sensiblement disposé à la verticale, sensiblement dans le plan Y-Y', ou sensiblement de façon oblique, sensiblement éloigné du châssis 2, comme représenté aux figures 4 à 6. Il s'agit de la position de maintenance du semoir 1.

Le passage du bâti 20, et donc de la trémie principale 11, de la position abaissée, la position de travail, à la position relevée, la position de maintenance, et inversement, se fait par l'intermédiaire des moyens de basculement, qui sont mécaniques, et non pneumatiques ou hydrauliques.

De préférence, les moyens de basculement agissent comme un parallélogramme déformable, sans pour autant être strictement limité à un parallélogramme au sens géométrique du terme. Les moyens de basculement comprennent un quadrilatère 24 articulé, qui, de préférence n'est pas un parallélogramme 24, sans pour autant que cela ne soit exclu. Le quadrilatère 24 a une forme sensiblement perpendiculaire au plan formé par le châssis 2, donc il est disposé sensiblement dans le plan Y-Y', que le bâti 20 soit en position abaissée ou relevée, et reste sensiblement dans cette position perpendiculaire lorsque le bâti 20 passe de la position abaissée à la position relevée et inversement.

Le quadrilatère 24 articulé présente l'avantage, non seulement de ne pas nécessiter l'emploi de moyens hydrauliques ou pneumatiques pour le passage d'une position à l'autre, mais également de procurer au bâti 20 une position relevée stable qui n'est pas atteignable par l'emploi d'un simple pivotement selon un point de pivotement unique ou un axe unique de pivotement. Ces moyens de basculement présentent également l'avantage de permettre un large débattement du bâti 20 permettant un accès facilité aux éléments constitutifs de l'élément semeur 1 selon l'invention.

De préférence, le quadrilatère 24 déformable comprend un bras inférieur 29 fixe par rapport au châssis 2, une biellette principale 30, une biellette secondaire 31 et un bras de liaison supérieur 32, et comprenant quatre points de pivots 25, 26, 27, 28, par rapport auxquels les bras inférieur et supérieur 29, 32 et les biellettes 30, 31 s'articulent. Le bras inférieur 29 porte deux points de pivots inférieurs 25, 26, fixes par rapport au châssis 2, autour desquels s'articulent respectivement la biellette principale 30 et la biellette secondaire 31, la biellette principale 30 s'articulant également par rapport au bâti 20 selon un premier point de pivot supérieur 28 et la biellette secondaire 31 s'articulant par rapport au bâti 20, et en particulier par rapport au bras de liaison supérieur 32, selon un second point de pivot supérieur 27, les premier et second points de pivot supérieur 27 et 28 étant mobiles par rapport au châssis 2 lors du passage du bâti 20 de sa position abaissée à sa position relevée, et inversement.

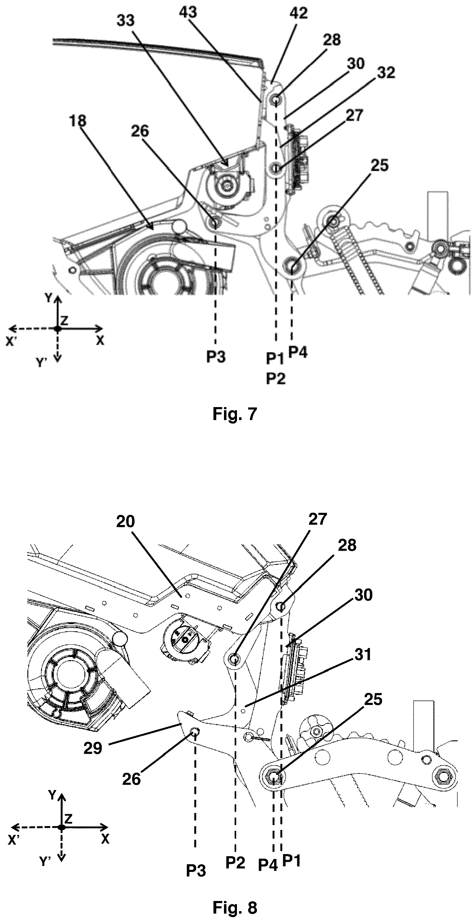

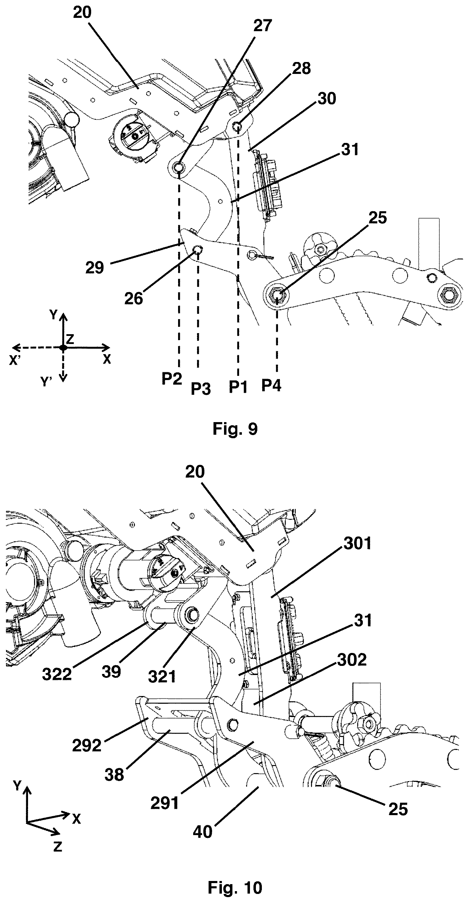

Le quadrilatère 24 déformable 24 est sensiblement replié sur lui-même, ou partiellement ouvert, lorsque le bâti 20 est en position abaissée (figure 7), il se déplie lorsqu'il passe d'une position à l'autre (figure 8) et il est déplié, ou ouvert, lorsque le bâti 20 est en position relevée (figure 9), tout en maintenant une orientation sensiblement perpendiculaire au plan X-X'.

Le bras inférieur 29 du quadrilatère 24 déformable est fixe par rapport au châssis 2 et s'étend depuis ce dernier, de façon oblique, vers le haut et l'arrière du châssis 2. Il comprend les points de pivots inférieurs 25, 26, qui peuvent être disposés sur un même plan, par exemple le plan formé selon l'axe X-X', néanmoins de préférence, ils ne sont pas disposés sur le même plan horizontal, mais sur un plan oblique par rapport au plan X-X'. Il y a alors un point de pivot inférieur bas 25 et un point de pivot inférieur haut 26. De préférence, le bras inférieur 29 comprend une partie supérieure coudée, vers le haut et l'arrière du châssis 2, et dont l'extrémité supérieure comprend le point de pivot inférieur haut 26.

De préférence, le point de pivot inférieur bas 25 est également un point de pivot du parallélogramme déformable 44 horizontal permettant un réglage vertical de l'élément semeur 1. Avantageusement, il s'agit du point de pivot entre le châssis 2 et le bras supérieurs 42 du parallélogramme déformable 44.

De préférence, le point de pivot inférieur bas 25 du bras inférieur 29 fixé au châssis 2 est disposé à une distance du point de pivot inférieur haut 26, qui est supérieure à la distance entre le point de pivot supérieur bas 27 et le point de pivot supérieur haut 28 du bras de liaison supérieur 32.

La biellette principale 30 du quadrilatère 24 déformable est articulée et mobile, et relie le châssis 2 au bâti 20. Elle est articulée par rapport au châssis 2, et en particulier au bras inférieur 29, au niveau du point de pivot inférieur bas 25, et mobile par rapport au bâti 20 au niveau du point de pivot supérieur haut 28.

La biellette secondaire 31 est également articulée et mobile, et relie le châssis 2 à un bras supérieur 32, lui même articulé et mobile reliant la biellette secondaire 31 au bâti 20 ou liant la biellette secondaire 31 à la biellette principale 30. La biellette secondaire 31 est articulée par rapport au châssis 2, et en particulier au bras inférieur 29, au niveau du point de pivot inférieur haut 26, et par rapport au bras de liaison supérieur 32 au niveau du point de pivot supérieur bas 27. Le bras de liaison supérieur 32 peut être fixe par rapport au bâti 20 ou bien mobile au niveau du point de pivot supérieur haut 28.

De préférence, la biellette secondaire 31 est plus courte que la biellette principale 30 de façon à ce que la distance entre le point de pivot inférieur haut 26 et le point de pivot supérieur bas 27 soit plus faible que la distance entre le point de pivot inférieur bas 25 et le point de pivot supérieur haut 28.

De préférence, la biellette principale 30 a une longueur au moins égale ou supérieure à la somme des longueurs des biellettes secondaire 31 et supérieure 32 de façon à ce que la distance entre les points de pivot inférieur bas 25 et supérieur haut 28 soit au moins égale ou supérieure à la somme des distances entre les points de pivots inférieur bas 26, supérieur bas 27 et supérieur haut 28.

En plus de la position abaissée et de la position relevée, le quadrilatère 24 permet d'adopter au moins une position intermédiaire dans laquelle la biellette principale 30 se trouve dans une position permettant l'alignement des points de pivot 26, 27 et 28.

Lorsque le bâti 20 est en position abaissée, le point de pivot supérieur bas 27 et le point de pivot supérieur haut 28 sont sensiblement alignés l'un par rapport à l'autre sensiblement verticalement, dans le plan Y-Y'. Ces points de pivot 27 et 28 se trouvent sensiblement sur une même ligne verticale projetée P1, P2, au sol, ou sur un plan X-X'. Les points de projetée P1 et P2, respectivement des points de pivot supérieur 28 et 27 se trouvent à une position relative se situant entre le point de projeté P3 du point de pivot inférieur haut 26 et le point de projetée P4 du point de pivot inférieur bas 25 (figure 7).

Lorsque le bâti 20 et donc la trémie principale 11 se soulèvent, la biellette principale 30 pivote par rapport au point de pivotement inférieur bas 25, afin que le point de pivot supérieur haut 28 se déplace vers l'avant du châssis 2, dans un mouvement de translation sensiblement horizontal, dans le plan X-X'. La projetée P1 du point de pivot supérieur haut 28 se déplace vers l'avant et dépasse la projetée P4 du point de pivot inférieur bas 25. De façon concomitante, la biellette secondaire 31 pivote par rapport au point de pivotement inférieur haut 26 et se déploie de façon oblique vers le haut du châssis 2, puis vers l'arrière de façon horizontale, permettant au point de pivot supérieur bas 27 de se déplacer vers le haut puis l'arrière du châssis 2. La projetée P2 du point de pivot supérieur bas 27 se déplace alors en arrière vers la projetée P3 du point de pivot inférieur haut 26 (figure 8). Alors que le point de pivot supérieur bas 27 effectue son mouvement, la biellette principale 30 pivote à nouveau par rapport au point de pivotement inférieur bas 25, mais en sens inverse, afin que le point de pivot supérieur haut 28 se déplace vers l'arrière du châssis 2 dans un mouvement de translation sensiblement horizontal, dépassant sa position relative qu'il occupe lorsque le bâti 20 est en position abaissée, jusqu'à ce que le point de pivot supérieur bas 27 dépasse la position relative du point de pivot inférieur haut 26.

Lorsque la projetée P2 du point de pivot supérieur bas 27 se déplace en arrière vers la projetée P3 du point de pivot inférieur haut 26, le pivot supérieur bas 27 atteint un point d'équilibre instable du quadrilatère 24 déformable pour lequel les projetées P2 et P3 sont confondues. La projetée P1 du point de pivotement inférieur bas 25 dépasse vers l'arrière du châssis 2 la projetée P4 du point de pivot inférieur bas 25 pour revenir à sa position relative qu'il occupe lorsque le bâti 20 est en position abaissée, entre les projetées P3 et P4. La projetée P2 du point de pivot supérieur bas 27 se déplace vers l'arrière du châssis 2 et dépasse la projetée P3 du point de pivot inférieur haut 26 (figure 9).

Dans cette position, le bâti 20, et donc la trémie principale 11, se trouve en position relevée, bloqués par la mise en butée de l'extrémité haute de la biellette principale 30 au contact du bâti 20 ou d'un élément formant butée ou sur une paroi de la trémie principale 11, verrouillant le bâti 20 et la trémie principale 11 dans cette position sans l'emploi d'autres moyens de blocage supplémentaires.

Pour faire passer le bâti 20, et donc la trémie principale 11, de la position haute à la position abaissée, le quadrilatère 24 déformable se replie selon des mouvements inverses à ceux décrits pour son ouverture. La biellette principale 30 pivote par rapport au point de pivotement inférieur bas 25, pour que le point de pivot supérieur haut 28 se déplace vers l'avant du châssis 2, dans un mouvement de translation sensiblement horizontal alors que la biellette secondaire 31 se déplace vers l'avant du châssis 2 de façon horizontale puis façon oblique vers le bas du châssis 2 pour que le point de pivot supérieur bas 27 se déplace vers l'avant puis le bas du châssis 2. La projetée P1 se déplace vers l'avant du châssis 2 vers la projetée P4 et la dépasse, alors que la projetée P2 se déplace elle aussi vers l'avant du châssis 2 vers la projetée P4 et dépasse la projetée P3 du point de pivot inférieur haut 26. Alors que le point de pivot supérieur bas 27 effectue son mouvement, la biellette principale 30 pivote à nouveau par rapport au point de pivotement inférieur bas 25, mais en sens inverse, afin que le point de pivot supérieur haut 28 se déplace vers l'arrière du châssis 2 dans un mouvement de translation sensiblement horizontal pour retrouver sa position relative, le bâti 20 et donc la trémie principale 11 se trouvant en position abaissée. Les projetées P1 et P2 se retrouvent alignés sensiblement sur la même verticale entre les projetées P3 et P4.

Dans les modes de réalisation dans lesquels les premiers moyens 18 de distribution sont fixés sur un bras 21 du bâti 20, le soulèvement du bâti 20 vers sa position relevée permet le désengagement de l'extrémité libre 22 du bras 21 de ses moyens de fixation 23 au châssis 2, et le passage en position abaissée du bâti 20 permet l'engagement de l'extrémité libre 22 aux moyens de fixation 23 au châssis 2, verrouillant ainsi le bâti 20 dans sa position abaissée.

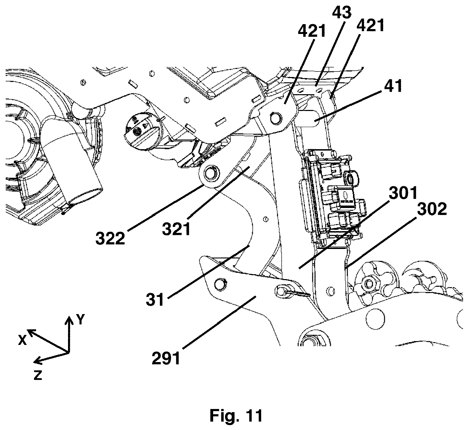

De préférence, les moyens de basculement comprennent un double quadrilatère déformable, deux quadrilatères adjacents, parallèles et non en série, partageant un coté commun (figures 10 et 11), disposés sensiblement perpendiculairement par rapport au châssis 2. Il peut également s'agir d'un double parallélogramme déformable, deux parallélogrammes adjacents formant un parallélépipède déformable.

Dans les modes de réalisation dans lesquels les moyens de basculement comprennent un double quadrilatère déformable, le bras inférieur 29 comprend une première portion latérale 291 et une seconde portion latérale 292, opposée et disposée sensiblement parallèle à la première section latérale 291, comprenant chacune des moyens pour recevoir un arbre de pivotement 38, de préférence comprennent ou ayant la forme de trous débouchants, dont l'axe forme le point de pivot inférieur haut 26. Le bras supérieur 32 comprend une première portion latérale 321 et une seconde portion latérale 322, opposée et disposée sensiblement parallèle à la première section latérale 321, et comprend des moyens pour recevoir un arbre de pivotement 39, de préférence comprennent ou ayant la forme de trous débouchants, dont l'axe forme le point de pivot supérieur bas 27. La bielle secondaire 31 comprend, de préférence à chacune de ces extrémités, des moyens de réception, de préférence un trou débouchant, engageant d'un coté l'arbre de pivotement 38 et de l'autre coté l'arbre de pivotement 39. La biellette principale 30 comprend une première portion latérale 301 et une seconde portion latérale 302, opposée et disposée sensiblement parallèle à la première section latérale 301, et comprend des moyens pour recevoir un arbre de pivotement inférieur 40, dont l'axe forme le point de pivot inférieur bas 25, et des moyens pour recevoir un arbre de pivotement supérieur 41, dont l'axe forme le point de pivot supérieur haut 28 (figure 11).

De préférence, la biellette principale 30 est fixée au bâti 20, par l'intermédiaire d'une patte de fixation 42, elle-même fixée directement au bâti 20, de préférence par l'intermédiaire d'une platine 43 de fixation fixée sur le bâti 20 lui même, ou sur une paroi de la trémie principale 11. Avantageusement, la patte de fixation 42 comprend une première portion latérale 421 et une seconde portion latérale 422, opposée et disposée sensiblement parallèle à la première section latérale 422, comprenant des moyens, par exemple des trous débouchant, recevant l'arbre 41.

Même si le bras de liaison supérieur 32 peut être lié au bâti 20 au point de pivot supérieur haut 28, par exemple par l'intermédiaire d'un trou débouchant engageant l'arbre 41 disposé à son extrémité opposée à celle portant le point de pivot supérieur bas 27, donc opposée à celle comprenant le trou débouchant recevant l'arbre 39, il est, de préférence, fixée directement au bâti 20, avantageusement par l'intermédiaire de la platine 43 de fixation recevant la patte de fixation 42.

Dans les modes de réalisation dans lesquels, les premiers moyens 18 de distribution, et éventuellement également, s'ils sont présents, les moyens de transfert des premiers produits granulaires vers les premiers moyens de convoyage 19, sont fixés sur le bras 21 du bâti 20, la biellette secondaire 31 peut être coudée ou courbe, afin qu'en position basse du bâti 20, elle vienne se loger contre les premier moyens 18 de distribution, ce qui présente l'avantage d'avoir un élément semeur 1 plus compact.

Il est également avantageux de prévoir l'emploi de moyens de connexion et déconnexion automatique entre les premiers moyens 18 de distribution, ou les moyens de transfert des produits granulaires s'ils sont présents, et les premiers moyens de convoyage 19, et/ou entre les premiers moyens 18 de distribution et les moyens pneumatiques permettant l'alimentation en produits granulaires depuis la trémie principale 11 vers les premiers moyens 18 de distribution.

L'élément semeur 1 peut comprendre en outre un second ensemble de distribution d'un second produit granulaire, qui peut également être une graine ou semences, mais de nature différente que celle du premier produit granulaire permettant un mode de plantation de co-cultures. Néanmoins, de préférence, le second produit granulaire n'est pas une graine ou une semence, mais un produit phytosanitaire granulaire, ou un mélange de produits phytosanitaires granulaires, tels que par exemple des engrais, des herbicides, des insecticides, des nématicides, des fongicides, des pastilles anti-limaces, ou autres pesticides équivalents.

Le second ensemble de distribution est apte à distribuer le second produit granulaire au sol au moins avant les moyens 6 pour ouvrir le sillon, de préférence derrière les moyens 9 chasses débris s'ils sont présents, et/ou entre les moyens 6 pour ouvrir le sillon.

Le second ensemble de distribution comprend une première trémie, dite annexe, pouvant adopter toutes les dimensions et formes possibles ou adéquats, définissant un volume intérieur, et apte à comprendre, et en fonctionnement comprenant, un ou plusieurs produits phytosanitaires granulaires. Cette première trémie annexe est de préférence disposée en partie haute du châssis 2, au dessus, à l'aplomb ou en arrière des moyens 6 pour ouvrir le sillon, en avant des moyens 10 pour refermer le sillon, avantageusement elle est disposée en avant de la trémie principale 11, accolée à cette dernière, les deux trémies pouvant avantageusement partager une paroi commune, ou bien la première trémie annexe peut faire partie intégrante de, ou être intégrée dans, la trémie principale 11. Ainsi, la trémie annexe est solidaire du bâti 20.

Le second ensemble de distribution comprend des seconds moyens de distribution 33, pour distribuer de façon unitaire, un second produit granulaire au sol, qui sont, en fonctionnement, en communication avec la première trémie annexe, par exemple par une ouverture, de préférence obturable, pratiquée dans la paroi inférieure de ladite trémie annexe. De préférence, ces seconds moyens de distribution 33 unitaire coopèrent en fonctionnement, comprennent, ou sont, également des seconds moyens de convoyage, et comprennent éventuellement également des moyens de transfert pour le transfert du second produit granulaire des seconds moyens de distribution 33 unitaire aux seconds moyens de convoyage.

Les seconds moyens de distribution 33 unitaire du second ensemble de distribution peuvent être solidaires du châssis 2 ; toutefois, de préférence, ils sont également fixés au bâti 20, par tous moyens adéquats. Ainsi, le soulèvement du bâti 20 de sa position basse à sa position haute permet également à l'utilisateur de l'élément semeur 1 selon l'invention de pouvoir accéder aisément aux seconds moyens de distribution 33 unitaire afin de les contrôler, y effectuer leur maintenance ou leur remplacement. De préférence, dans ces modes de réalisation, il est également avantageux de prévoir l'emploi de moyens de connexion et déconnexion automatique entre les seconds moyens de distribution 33 unitaire et les seconds moyens de convoyage.

L'élément semeur 1 peut comprendre en outre un troisième ensemble de distribution d'un troisième produit granulaire, qui de préférence, n'est pas une graine ou une semence, mais un produit phytosanitaire granulaire, ou un mélange de produits phytosanitaires granulaires.

Le troisième ensemble de distribution est apte à distribuer le second produit granulaire au sol au moins entre les moyens 6 pour ouvrir le sillon et/ou après les moyens 10 pour fermer le sillon, et/ou après les moyens de tassement 8 du sillon.

Le troisième ensemble de distribution comprend une seconde trémie annexe 34 pouvant adopter toutes les dimensions et formes possibles ou adéquats, définissant un volume intérieur, qui est apte à comprendre, et en fonctionnement comprenant, un ou plusieurs produits phytosanitaires granulaires. Cette seconde trémie annexe est de préférence disposée en partie haute du châssis 2, au dessus, à l'aplomb ou en arrière des moyens 10 pour refermer le sillon, avantageusement disposée en arrière de la trémie principale 11 et accolée à cette dernière, les deux trémies 11 et 34 pouvant avantageusement partager une paroi commune.

Le troisième ensemble de distribution comprend des troisièmes moyens de distribution 35, pour distribuer de façon unitaire un troisième produit granulaire au sol, qui sont, en fonctionnement, en communication avec la seconde trémie annexe 34, par exemple par une ouverture, de préférence obturable, pratiquée dans la paroi inférieure de ladite trémie 34. De préférence, ces troisièmes moyens de distribution 35 coopèrent, comprennent, ou sont, également des troisièmes moyens de convoyage 36, et comprennent éventuellement également des moyens de transfert pour le transfert du second produit granulaire des troisièmes moyens de distribution 35 aux troisièmes moyens de convoyage 36.

Les troisièmes moyens de distribution 35 unitaire peuvent être solidaires du châssis 2 ; toutefois, de préférence, ils sont fixés par tous moyens adéquats directement au bâti 20 ou bien à la seconde trémie annexe 34, elle-même solidaire de la trémie principale 11, qui est solidaire du bâti 20. Ainsi, le soulèvement du bâti 20 de sa position basse à sa position haute permet à l'utilisateur de l'élément semeur 1 selon l'invention de pouvoir accéder également et aisément aux troisièmes moyens de distribution 35 unitaire afin de les contrôler, y effectuer leur maintenance ou leur remplacement. De préférence, dans ces modes de réalisation, il est également avantageux de prévoir l'emploi de moyens de connexion et déconnexion automatique entre les troisièmes moyens de distribution 35 et les troisièmes moyens de convoyage 36.

De préférence, les troisièmes moyens de convoyage 36 sont portés par un bras 37, fixe, solidaire du châssis 2, qui s'étend depuis le châssis 2 avantageusement de façon oblique vers le haut et l'arrière du châssis 2.

Le semoir selon l'invention comprend un ou plusieurs éléments semeurs 1 selon l'invention, de préférence monté(s) sur un châssis porteur, porté ou trainé par un engin agricole. Le châssis porteur comprend alors des moyens d'attelage afin de le lier, de façon réversible, avec l'engin agricole, qui le porte ou le tracte. De préférence, le semoir comprend une ou plusieurs roues, de préférence mobile(s) afin d'être relevables ou rétractables, afin qu'elles ne soient pas en contact avec le sol, par exemple durant les manoeuvres ou le transport du semoir.

L'étendue de la protection de la présente invention est définie par les revendications jointes.

## Revendications

1. Élément semeur (1) de produits granulaires à distribuer au sol comprenant un châssis (2), un premier ensemble de distribution d'un premier produit granulaire comprenant une trémie principale (11), fixée à un bâti (20) qui est mobile par rapport audit châssis (2) et apte à adopter une position dite « abaissée », qui est la position de travail dudit élément semeur (1), et une position dite « relevée », qui est la position de maintenance dudit élément semeur (1), et à passer de ladite position « abaissée » à ladite position « relevée » et inversement, **caractérisé en ce que** ledit élément semeur (1) comprenant en outre des moyens de basculement dudit bâti (20) comprenant un quadrilatère (24) déformable ou un double quadrilatère déformable, liant ledit bâti (20) audit châssis (2), lesdits moyens de basculement étant disposés sensiblement perpendiculairement au plan d'extension sensiblement horizontal formé par ledit châssis (2) s'étendant le long de l'axe X-X', et maintenus sensiblement perpendiculaires audit plan d'extension dans lesdites postions « abaissée » et « relevée » et lors du passage de l'une à l'autre et inversement.

2. L'élément semeur (1) selon la revendication 1, dans lequel les moyens de basculement du bâti (20) comprennent un bras inférieur (29) fixe et solidaire du châssis (2), portant deux points de pivots inférieurs (25, 26) fixes, autour desquels s'articulent respectivement une biellette principale (30) et une biellette secondaire (31), ledit bâti (20) s'articulant par rapport à ladite biellette principale (30) à un premier point de pivot supérieur (28) et ladite biellette secondaire (31) s'articulant par rapport à un bras de liaison supérieur (32) à un second point de pivot supérieur (27), ledit bras de liaison supérieur (32) étant relié audit bâti (20) ou à ladite biellette principale (30), lesdits premier et second points de pivot supérieurs (27, 28) étant mobiles par rapport audit châssis (2).

3. L'élément semeur (1) selon la revendication 2, dans lequel la distance entre le point de pivot inférieur bas (25) et le point de pivot inférieur haut (26) du bras inférieur (29) est supérieure à la distance entre le point de pivot supérieur bas (27) du bras de liaison supérieur (32) et le point de pivot supérieur haut (28) du bâti (20).

4. L'élément semeur (1) selon l'une quelconque des revendications 2 ou 3, dans lequel la distance entre le point de pivot inférieur haut (26) du bras inférieur (29) et le point de pivot supérieur bas (27) de la biellette secondaire (31) est inférieure à la distance entre le point de pivot inférieur bas (25) du bras inférieur (29) et le point de pivot supérieur haut (28) du bâti (20).

5. L'élément semeur (1) selon l'une quelconque des revendications 2 à 4, dans lequel le bras inférieur (29) comprend des moyens pour recevoir un arbre de pivotement (38) dont l'axe forme un des deux points de pivots inférieurs (26) et dans lequel le bras de liaison supérieur (32) comprend des moyens pour recevoir un arbre de pivotement (39) dont l'axe forme le second point de pivot supérieur (27), la biellette secondaire (31) comprenant des moyens d'engagement desdits arbres de pivotement (38, 39).

6. L'élément semeur (1) selon l'une quelconque des revendications 2 à 5, dans lequel la biellette principale (30) comprend des moyens pour recevoir un arbre de pivotement inférieur (40), dont l'axe forme l'un des points de pivot inférieur (25) et des moyens pour recevoir un arbre de pivotement supérieur (41), dont l'axe forme le point de pivot supérieur haut (28).

7. L'élément semeur (1) selon l'une quelconque des revendications 2 à 6, dans lequel la biellette principale (30) est solidaire du bâti (20), par l'intermédiaire d'une patte de fixation (42).

8. L'élément semeur (1) selon l'une quelconque des revendications précédentes, comprenant en outre des moyens d'attelage (4) comprennent une barre d'outils (41), à laquelle le châssis (2) est lié, et comprenant en outre des moyens de réglage de la position vertical dudit élément semeur comprenant un parallélogramme déformable (44) ou un parallélépipède déformable, disposé sensiblement horizontalement, et étant articulé par rapport au châssis (2) par au moins un point de pivotement, qui est également un point de pivot des moyens des moyens de basculement du bâti (20).

9. L'élément semeur (1) selon l'une quelconque des revendications précédentes, dans lequel le premier ensemble de distribution du premier produit granulaire comprend en outre des premiers moyens de distribution (18) unitaire dudit premier produit granulaire, qui sont solidaires du bâti (20) et donc mobiles avec ledit bâti (20), ledit élément semeur comprenant en outre des premiers moyens de convoyage (19) dudit premier produit granulaire jusqu'au sol, qui sont solidaires du châssis (2) et donc fixes par rapport au châssis (2).

10. L'élément semeur (1) selon la revendication 9, dans lequel les premiers moyens de distribution (18) unitaire dudit premier produit granulaire sont fixés à un bras (21) fixé au bâti (20), et s'étendant depuis ledit bâti (20) vers le châssis (2), ledit bras (21) étant mobile par rapport audit châssis (2), et apte à engager et se désengager de moyens de fixation (23), prévus sur ledit châssis (2) et aptes à recevoir ledit bras (21).

11. L'élément semeur (1) selon l'une quelconque des revendications précédentes, comprenant en outre un second ensemble de distribution d'un second produit granulaire comprenant une première trémie annexe, solidaire du bâti (20), et donc mobile par rapport au châssis (2).

12. L'élément semeur (1) selon la revendication 11, dans lequel le second ensemble de distribution d'un second produit granulaire comprend des seconds moyens de distribution (33) unitaire, solidaires du bâti (20), et donc mobiles par rapport au châssis (2), et comprenant éventuellement des seconds moyens de convoyage dudit second produit granulaire jusqu'au sol.

13. L'élément semeur (1) selon l'une quelconque des revendications 11 ou 12, comprenant en outre un troisième ensemble de distribution d'un troisième produit granulaire au sol, comprenant une seconde trémie annexe (34), solidaire du bâti (20) et donc mobile par rapport au châssis (2).

14. L'élément semeur (1) selon la revendication 13, dans lequel le troisième ensemble de distribution d'un troisième produit granulaire au sol comprenant en outre des troisièmes moyens de distribution (35) unitaire, qui sont solidaires du bâti (20) ou de la seconde trémie annexe (34), et donc mobiles par rapport au châssis (2), ledit élément semeur comprenant en outre des troisièmes moyens de convoyage (36) dudit troisième produit granulaire jusqu'au sol, qui sont solidaires du châssis (2) et donc fixes par rapport au châssis (2).

15. Semoir comprenant un ou plusieurs éléments semeurs (1) selon l'une quelconque des revendications 1 à 14.

## Patentansprüche

1. Säelement (1) für auf dem Boden zu verteilende Granulatprodukte, beinhaltend ein Chassis (2), eine erste Einheit zur Verteilung eines ersten Granulatprodukts, die einen an einem Gestell (20) befestigten Haupttrichter (11) beinhaltet, der in Bezug auf das Chassis (2) beweglich ist und dazu fähig ist, eine sogenannte "abgesenkte" Position, welche die Arbeitsposition des Säelements (1) ist, und eine sogenannte "angehobene" Position, welche die Wartungsposition des Säelements (1) ist, einzunehmen und von der "abgesenkten" Position in die "angehobene" Position zu wechseln und umgekehrt, **dadurch gekennzeichnet, dass** das Säelement (1) ferner Mittel zum Kippen des Gestells (20) beinhaltet, die ein verformbares Viereck (24) oder ein verformbares Doppelviereck beinhalten, welches das Gestell (20) mit dem Chassis (2) verbindet, wobei die Kippmittel zu der im Wesentlichen horizontalen Erstreckungsebene, die durch das Chassis (2) gebildet wird und sich entlang der Achse X-X' erstreckt, im Wesentlichen senkrecht angeordnet sind und in der "abgesenkten" und "angehobenen" Position und beim Wechseln von der einen in die andere und umgekehrt zu der Erstreckungsebene im Wesentlichen senkrecht gehalten werden.

2. Säelement (1) nach Anspruch 1, wobei die Kippmittel des Gestells (20) einen ortsfesten und mit dem Chassis (2) fest verbundenen unteren Arm (29) beinhalten, der zwei ortsfeste untere Drehpunkte (25, 26) trägt, um die sich ein Hauptschwingarm (30) bzw. ein Nebenschwingarm (31) drehen, wobei sich das Gestell (20) in Bezug auf den Hauptschwingarm (30) um einen ersten oberen Drehpunkt (28) dreht und sich der Nebenschwingarm (31) in Bezug auf einen oberen Verbindungsarm (32) um einen zweiten oberen Drehpunkt (27) dreht, wobei der obere Verbindungsarm (32) mit dem Gestell (20) oder dem Hauptschwingarm (30) verbunden ist, wobei der erste und der zweite obere Drehpunkt (27, 28) in Bezug auf das Chassis (2) beweglich sind.

3. Säelement (1) nach Anspruch 2, wobei der Abstand zwischen dem tiefer gelegenen unteren Drehpunkt (25) und dem höher gelegenen unteren Drehpunkt (26) des unteren Arms (29) größer ist als der Abstand zwischen dem tiefer gelegenen oberen Drehpunkt (27) des oberen Verbindungsarms (32) und dem höher gelegenen oberen Drehpunkt (28) des Gestells (20).

4. Säelement (1) nach einem beliebigen der Ansprüche 2 oder 3, wobei der Abstand zwischen dem höher gelegenen unteren Drehpunkt (26) des unteren Arms (29) und dem tiefer gelegenen oberen Drehpunkt (27) des Nebenschwingarms (31) kleiner ist als der Abstand zwischen dem tiefer gelegenen unteren Drehpunkt (25) des unteren Arms (29) und dem höher gelegenen oberen Drehpunkt (28) des Gestells (20).

5. Säelement (1) nach einem beliebigen der Ansprüche 2 bis 4, wobei der untere Arm (29) Mittel zum Aufnehmen einer Drehachse (38) beinhaltet, deren Achse einen der zwei unteren Drehpunkte (26) bildet, und wobei der obere Verbindungsarm (32) Mittel zum Aufnehmen einer Drehachse (39) beinhaltet, deren Achse den zweiten oberen Drehpunkt (27) bildet, wobei der Nebenschwenkarm (31) Mittel zum Eingreifen in die Drehachsen (38, 39) beinhaltet.

6. Säelement (1) nach einem beliebigen der Ansprüche 2 bis 5, wobei der Hauptschwenkarm (30) Mittel zum Aufnehmen einer unteren Drehachse (40), deren Achse einen der unteren Drehpunkte (25) bildet, und Mittel zum Aufnehmen einer oberen Drehachse (41), deren Achse den höher gelegenen oberen Drehpunkt (28) bildet, beinhaltet.

7. Säelement (1) nach einem beliebigen der Ansprüche 2 bis 6, wobei der Hauptschwenkarm (30) mittels einer Befestigungslasche (42) mit dem Gestell (20) fest verbunden ist.

8. Säelement (1) nach einem beliebigen der vorhergehenden Ansprüche, ferner beinhaltend Kupplungsmittel (4), die eine Werkzeugleiste (41) beinhalten, mit der das Chassis (2) verbunden ist, und ferner beinhaltend Mittel zur Einstellung der vertikalen Position des Säelements, die ein verformbares Parallelogramm (44) oder ein verformbares Parallelepiped beinhalten, das im Wesentlichen horizontal angeordnet ist und in Bezug auf das Chassis (2) durch mindestens einen Drehpunkt angelenkt ist, welcher auch ein Drehpunkt der Kippmittel des Gestells (20) ist.

9. Säelement (1) nach einem beliebigen der vorhergehenden Ansprüche, wobei die erste Einheit zur Verteilung des ersten Granulatprodukts ferner erste Mittel (18) zur Einzelverteilung des ersten Granulatprodukts beinhaltet, die mit dem Gestell (20) fest verbunden und somit zusammen mit dem Gestell (20) beweglich sind, wobei das Säelement ferner erste Mittel (19) zum Befördern des ersten Granulatprodukts bis zum Boden beinhaltet, die mit dem Chassis (2) fest verbunden und somit in Bezug auf das Chassis (2) ortsfest sind.

10. Säelement (1) nach Anspruch 9, wobei die ersten Mittel (18) zur Einzelverteilung des ersten Granulatprodukts an einem Arm (21) befestigt sind, der an dem Gestell (20) befestigt ist und sich von dem Gestell (20) zu dem Chassis (2) erstreckt, wobei der Arm (21) in Bezug auf das Chassis (2) beweglich ist und dazu fähig ist, in Befestigungsmittel (23), die an dem Chassis (2) vorgesehen sind und dazu fähig sind, den Arm (21) aufzunehmen, einzugreifen und sich davon zu lösen.

11. Säelement (1) nach einem beliebigen der vorhergehenden Ansprüche, ferner beinhaltend eine zweite Einheit zur Verteilung eines zweiten Granulatprodukts, die einen ersten Zusatztrichter beinhaltet, der mit dem Gestell (20) fest verbunden und somit in Bezug auf das Chassis (2) beweglich ist.

12. Säelement (1) nach Anspruch 11, wobei die zweite Einheit zur Verteilung eines zweiten Granulatprodukts zweite Mittel (33) zur Einzelverteilung beinhaltet, die mit dem Gestell (20) fest verbunden und somit in Bezug auf das Chassis (2) beweglich sind, und eventuell zweite Mittel zum Befördern des zweiten Granulatprodukts bis zum Boden beinhaltet.

13. Säelement (1) nach einem beliebigen der Ansprüche 11 oder 12, ferner beinhaltend eine dritte Einheit zur Verteilung eines dritten Granulatprodukts auf dem Boden, die einen zweiten Zusatztrichter (34) beinhaltet, der mit dem Gestell (20) fest verbunden und somit in Bezug auf das Chassis (2) beweglich ist.

14. Säelement (1) nach Anspruch 13, wobei die dritte Einheit zur Verteilung eines dritten Granulatprodukts auf dem Boden ferner dritte Mittel (35) zur Einzelverteilung beinhaltet, die mit dem Gestell (20) oder dem zweiten Zusatztrichter (34) fest verbunden und somit in Bezug auf das Chassis (2) beweglich sind, wobei das Säelement ferner dritte Mittel (36) zum Befördern des dritten Granulatprodukts bis zum Boden beinhaltet, die mit dem Chassis (2) fest verbunden und somit in Bezug auf das Chassis (2) ortsfest sind.

15. Sämaschine, die ein oder mehrere Säelemente (1) nach einem beliebigen der Ansprüche 1 bis 14 beinhaltet.

## Claims

1. Sowing unit (1) for granular products to be distributed on the ground, comprising a chassis (2), a first assembly for distributing a first granular product, comprising a main hopper (11), fastened to a frame (20) which is mobile with respect to said chassis (2) and capable of adopting what is referred to as a "lowered" position, which is the working position of said sowing unit (1), and what is referred to as a "raised" position, which is the maintenance position of said sowing unit (1), and of passing from said "lowered" position to said "raised" position and vice versa, **characterized in that** said sowing unit (1) further comprises means for tilting said frame (20), comprising a deformable quadrilateral (24) or a deformable double quadrilateral, connecting said frame (20) to said chassis (2), said tilting means being disposed substantially perpendicularly to the substantially horizontal plane of extension formed by said chassis (2) extending along the axis X-X', and being held substantially perpendicular to said plane of extension in said "lowered" and "raised" positions and during the passage from one to the other and vice versa.

2. Sowing unit (1) according to Claim 1, wherein the means for tilting the frame (20) comprise a fixed lower arm (29) secured to the chassis (2), bearing two fixed lower pivot points (25, 26) about which a main link rod (30) and a secondary link rod (31) are respectively articulated, said frame (20) being articulated with respect to said main link rod (30) at a first upper pivot point (28) and said secondary link rod (31) being articulated with respect to an upper connecting arm (32) at a second upper pivot point (27), said upper connecting arm (32) being connected to said frame (20) or to said main link rod (30), said first and second upper pivot points (27, 28) being mobile with respect to said chassis (2) .

3. Sowing unit (1) according to Claim 2, wherein the distance between the bottom lower pivot point (25) and the top lower pivot point (26) of the lower arm (29) is greater than the distance between the bottom upper pivot point (27) of the upper connecting arm (32) and the top upper pivot point (28) of the frame (20).

4. Sowing unit (1) according to either one of Claims 2 and 3, wherein the distance between the top lower pivot point (26) of the lower arm (29) and the bottom upper pivot point (27) of the secondary link rod (31) is smaller than the distance between the bottom lower pivot point (25) of the lower arm (29) and the top upper pivot point (28) of the frame (20).

5. Sowing unit (1) according to any one of Claims 2 to 4, wherein the lower arm (29) comprises means for receiving a pivot shaft (38), the pin of which forms one of the two lower pivot points (26), and wherein the upper connecting arm (32) comprises means for receiving a pivot shaft (39), the pin of which forms the second upper pivot point (27), the secondary link rod (31) comprising means for engaging with said pivot shafts (38, 39).

6. Sowing unit (1) according to any one of Claims 2 to 5, wherein the main link rod (30) comprises means for receiving a lower pivot shaft (40), the pin of which forms one of the lower pivot points (25), and means for receiving an upper pivot shaft (41), the pin of which forms the top upper pivot point (28).

7. Sowing unit (1) according to any one of Claims 2 to 6, wherein the main link rod (30) is secured to the frame (20), by a fastening tab (42).

8. Sowing unit (1) according to any one of the preceding claims, further comprising hitching means (4) which comprise a tool bar (41), to which the chassis (2) is connected, and further comprising means for adjusting the vertical position of said sowing unit, comprising a deformable parallelogram (44) or a deformable parallelepiped, disposed substantially horizontally, and being articulated with respect to the chassis (2) by at least one pivoting point, which is also a pivot point of the means for tilting the frame (20).

9. Sowing unit (1) according to any one of the preceding claims, wherein the first assembly for distributing the first granular product further comprises first unitary means (18) for distributing said first granular product, which are secured to the frame (20) and are therefore mobile with said frame (20), said sowing unit further comprising first means (19) for conveying said first granular product to the ground, which are secured to the chassis (2) and are therefore fixed with respect to the chassis (2).

10. Sowing unit (1) according to Claim 9, wherein the first unitary means (18) for distributing said first granular product are fastened to an arm (21) fastened to the frame (20), and extending from said frame (20) towards the chassis (2), said arm (21) being mobile with respect to said chassis (2) and being capable of engaging with and disengaging from fastening means (23) which are provided on said chassis (2) and are capable of receiving said arm (21).

11. Sowing unit (1) according to any one of the preceding claims, further comprising a second assembly for distributing a second granular product, comprising a first ancillary hopper that is secured to the frame (20) and is therefore mobile with respect to the chassis (2).

12. Sowing unit (1) according to Claim 11, wherein the second assembly for distributing a second granular product comprises second unitary distribution means (33), secured to the frame (20), and therefore mobile with respect to the chassis (2), and possibly comprising second means for conveying said second granular product to the ground.

13. Sowing unit (1) according to either one of Claims 11 and 12, further comprising a third assembly for distributing a third granular product on the ground, comprising a second ancillary hopper (34) that is secured to the frame (20) and is therefore mobile with respect to the chassis (2).

14. Sowing unit (1) according to Claim 13, wherein the third assembly for distributing a third granular product on the ground further comprises third unitary distribution means (35), which are secured to the frame (20) or to the second ancillary hopper (34) and are therefore mobile with respect to the chassis (2), said sowing unit further comprising third means (36) for conveying said third granular product to the ground, which are secured to the chassis (2) and are therefore fixed with respect to the chassis (2).

15. Seeder comprising one or more sowing units (1) according to any one Claims 1 to 14.
